# EUROPEAN PATENT SPECIFICATION

(11) **EP 2 571 334 B1**
(45) Date of publication and mention of the grant of the patent: **15.01.2014**
(21) Application number: 12183699.3
(22) Date of filing: 10.09.2012
(51) Int. Cl.: H05B 33/08

(54) **LED lighting time control apparatus**
LED-Beleuchtungszeit-Steuervorrichtung
Appareil de commande de temps d'éclairage à DEL

(30) Priority: 14.09.2011 JP 2011200995
(43) Date of publication of application: 20.03.2013
(73) Proprietor: Alpine Electronics, Inc., Tokyo (JP)
(72) Inventor: Yasumoto, Takashi, Iwaki-City, Fukushima 970-1192 (JP)
(74) Representative: Klunker . Schmitt-Nilson . Hirsch

(56) References cited:
- EP-A2- 1 986 470
- US-A1- 2008 030 153
- US-A1- 2009 026 977
- US-A1- 2010 148 703

## Description

The present invention relates to a technique which controls a lighting time of light emitting diodes (LEDs) which may be used as a backlight of a liquid crystal display (LCD), and particularly relates to an LED lighting time control apparatus which is able to accurately control a short lighting time of LEDs.

Because an LCD having a backlight displays clearly, many LCDs have a backlight. In view of environmental friendliness, for example, LEDs have come to be used as a backlight instead of cold cathode fluorescent lamps (CCFLs).

An LCD backlight may be required to provide a moderate brightness to a liquid crystal screen. In particular, a light control is desirable by which the brightness is increased in a bright environment and the brightness is reduced to prevent glare if it is dark. Particularly in a vehicle, the existence of a monitor having a certain brightness within a sight of a driver in a dark environment such as in a tunnel may disturb driving. Accordingly, for example, when a navigation screen is displayed on the monitor in a dark environment, the screen may be displayed darker by changing a display mode.

The use of such an LED as a backlight may require adjustment of illuminance of the LED for the necessities as described above. When LED light is controlled by pulse width modulation (PWM), the duty ratio of the PWM is controlled with a control device to thereby control the LED light. The duty ratio control by PWM increases the brightness as the pulse width of current being fed to the LED is increased and reduces the brightness as the pulse width is reduced, on a predetermined cycle.

The brightness of an LED may be adjusted by direct control over current to be fed to the LED. However, the adjustment by PWM control has often been used because it is more precise and may provide high controllability over many LEDs.

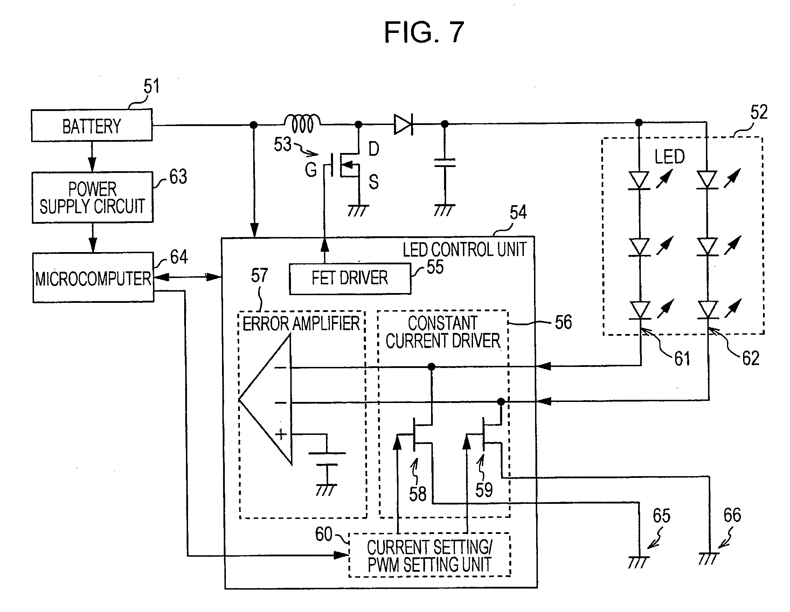

Such PWM control over LEDs may be performed with a control circuit as illustrated in Fig. 7, for example. The LED lighting control circuit of the related art illustrated in Fig. 7 includes a boosting constant current circuit that performs lighting control over 2-parallel arrays of 3-serial LEDs. The current from a battery 51 is fed to an LED 52 under control of a field effect transistor (FET) 53.

In the circuit illustrated in Fig. 7, driving of the FET 53 is controlled by an FET driver 55 in an LED control unit 54. The LED control unit 54 includes a constant current driver 56 for feeding a predetermined amount of current to the LEDs 52. Predetermined set amounts of current are fed to the 2-parallel first LED array 61 and second LED array 62 illustrated in Fig. 7 through a first constant current driver 58 and a second constant current driver 59, respectively, in accordance with set values in a current setting/PWM setting unit 60 for current setting and PWM setting (hereinafter, a setting unit which implements the same function will be referred to as a "current setting/PWM setting unit"). The first constant current driver 58 and second constant current driver 59 are grounded outside the LED control unit 54.

In this case, an error amplifier 57 detects and amplifies an error of each of the first LED array 61 and the second LED array 62, and feedback control is performed by performing PWM control over the FET 53 such that predetermined amounts of current may be fed to the first LED array 61 and the second LED array 62. Regarding this control, a microcomputer 64 receives voltage of the battery 51 and monitors variations of voltage to be fed to the LEDs, which particularly occur in a vehicle battery, and further receives voltage of the same battery 51 through a power supply circuit 63 for the microcomputer and receives detection values detected by the components within the LED control circuit 54 so as to perform control using predetermined software.

In the control circuit illustrated in Fig. 7, the constant current driver 56 controls current so that LEDs have a predetermined illuminance. For a vehicle monitor as described above, for example, it is desirable that the brightness is reduced in a darker part as much as possible for high contrast with a brighter part and that power consumption is reduced. In order to do so, it is desirable that driving control is performed in which the pulse width of the duty ratio control in the PWM control as described above is reduced as much as possible.

US 2008 030 153 A1 discloses an illumination device that can adjust the chromaticity and brightness of the illuminating light in a broad range using a construction that includes a first LED and a second LED having mutually different color temperatures, and a control circuit arranged to perform lighting and extinguishing control of the first and second LEDs, wherein the control circuit performs periodic lighting and extinguishing control of the first and second LEDs such that during a lighting period, the first and second LEDs are lit and extinguished in a complementary manner, and during an extinguishing period, both the first and second LEDs are extinguished.

However, in a widely used LED, reducing the pulse width for a shorter lighting time has a limitation of "minimum pulse width" due to the problem which will be described below.

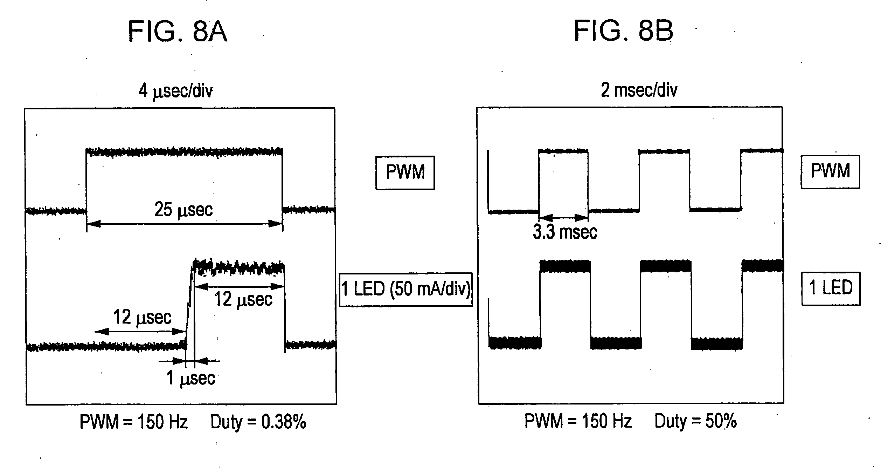

That is, when operations of pulses in the PWM control are examined in detail, for example, if the duty ratio is reduced as low as Duty = 0.38% as illustrated on the screen of 4 µsec/div with PWM = 150 Hz in Fig. 8A, the LED drive waveform of the PWM is reduced in width as small as 25 µsec. The waveform when 50 mA/div is fed to one LED in the illustrated example starts rising with a delay of 12 µsec from the time when a PWM waveform is generated, and a predetermined constant current is obtained in 1 µsec. Thus, the LED lights up with a general constant current after a lapse of the delay time of 12 µsec after a PWM waveform is generated and the rising time of 1 µsec, that is, a response delay time of 13 µsec. After that, when the PWM is turned off, the lighting current fed to the LED is turned off without any particular response delay.

As described above, generally, a constant current is not fed to an LED immediately after a PWM is turned on, but a response delay time of 13 µsec in total occurs as illustrated. This is because a series of operations sequentially occurs within a control IC, the operations being (1) LED lighting instruction in response to starting PWM, (2) constant current setting, (3) constant current driver operation, and (4) current feeding.

The response delay time as described above exists in all control ICs used for constant current control as described above. However, the response delay time including the delay time and the rising time varies in accordance with the characteristic of the control IC. Some control ICs are particularly designed and produced to have a shorter response delay time but are expensive accordingly.

The response delay of a control IC is significant when the pulse width of PWM is particularly small as in the example illustrated in Fig. 8A. For example, on the 2 msec/div screen illustrated in Fig. 8B, the response delay time is not significant at all when the duty value is sufficiently as high as Duty = 50% even with PWM = 150 Hz that is equal to that in Fig. 8A. It is significant only when the pulse width is particularly small. In many cases, a control IC is used for LED lighting control without caring about the response delay time.

JP 2010-267415 A (EP 2 257 125 A2) discloses an art including a light source unit having a plurality of LED circuits having a plurality of LEDs and a plurality of drive circuits each lighting the LEDs corresponding to LED circuit in response to the input of a PWM signal so that flicker is reduced without increasing the lighting frequency, thereby reducing the costs of the components and allowing smooth light control of the LED by increasing the number of tones. When a PWM control circuit outputs a PWM signal to each of the drive circuits in response to an input of a light control signal, output timings of PWM signals are made different from each other among the drive circuits so that the period of time when the LEDs of the whole light source unit light out can be reduced even with a reduced dimming ratio.

In order to light LEDs as dark as possible by controlling the constant current, the pulse width is reduced to the limits of the control ICs, that is, to the minimum lighting times of the control ICs. The pulse width that corresponds to the minimum lighting time is limited for the following reasons.

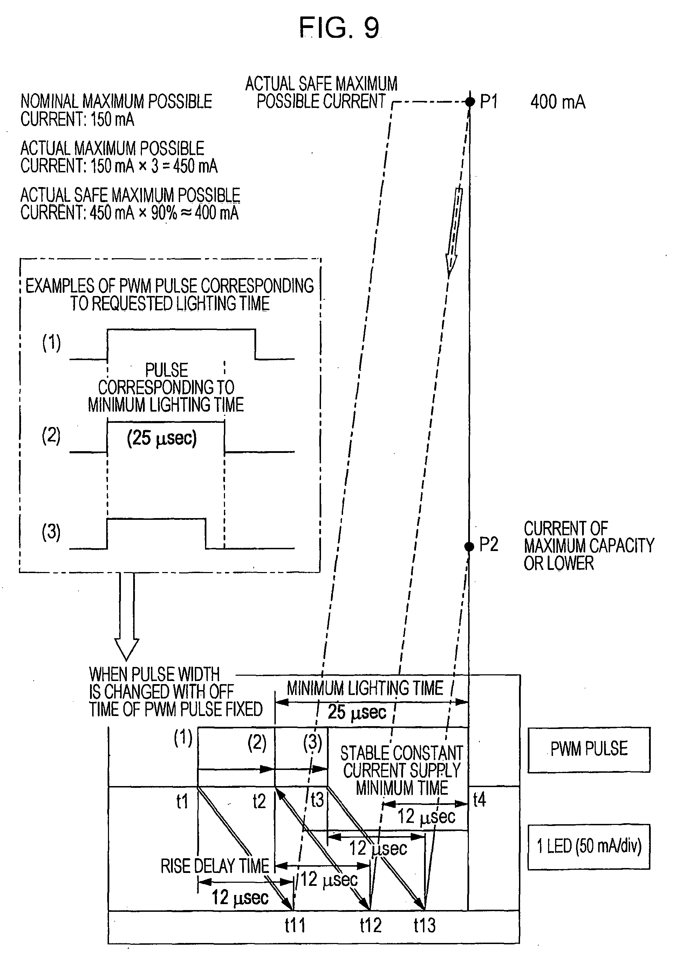

Referring to Fig. 9 illustrating the same waveform portion as that in Fig. 8A, in a waveform of PWM = 150 Hz having a 12 µsec delay time after PWM is turned on and 1 µsec of a rising time of a constant current as described above, the operating time until feeding of 400 mA in a constant current state after the rise is a minimum lighting time of the control IC, and the PWM pulse width at that time is a minimum lighting time of the PWM control.

In other words, existing control ICs widely used at present assure feeding of 150 mA at a maximum per output channel, which is regarded as a maximum output current or a maximum possible current (provisional name). However, in reality, an element capable of feeding current of about 450 mA that is triple the maximum output current is used, which is regarded as an actual maximum possible current (provisional name). On the premise of this, circuit design has been implemented by regarding a current of 400 mA that is about 90% of 450 mA as a safe actual maximum possible current (provisional name) for safety and control is performed so as to acquire the current as the ability time of the control IC.

Fig. 9 illustrates waveforms for understanding of the minimum lighting time in relation to the safe actual maximum possible current of a control IC. The PWM pulse examples corresponding to a requested lighting time in Fig. 9 have a PWM pulse (2) corresponding to a minimum lighting time (25 µsec) at the center, a pulse (1) larger than (2), and a pulse (3) smaller than (2). Fig. 9 further illustrates waveforms matched at the point of time when those pulses are turned off. In the PWM pulse (1) which is turned on at a time t1, the lighting current of the LED start rising at a time t11. At a time t4, the PWM pulse is turned off, and the LED lighting pulse under constant current control is also turned off. This control IC is set such that 400 mA flows in all LEDs.

Thus, the pulse (1) is controlled with 400 mA constant current as a whole and is turned off at the time t4. Thus, gradually reducing the width of the PWM pulse from the width of the pulse (1) in Fig. 9, the 400 mA constant current is no longer obtained at the point P1. The PWM pulse with the pulse width reduced up to that point is the pulse of the minimum lighting time, which is the pulse (2). In the illustrated example, the PWM pulse corresponding to the minimum lighting time is 25 µsec.

When the width of the PWM pulse is reduced to that of the pulse (3) having the illustrated waveform, the current at that time has a value lower than 400 mA above, such as 200 mA at a maximum, which is smaller than the predetermined maximum possible current. This only allows flow of a current to the LED for a lighting time smaller than the minimum lighting time.

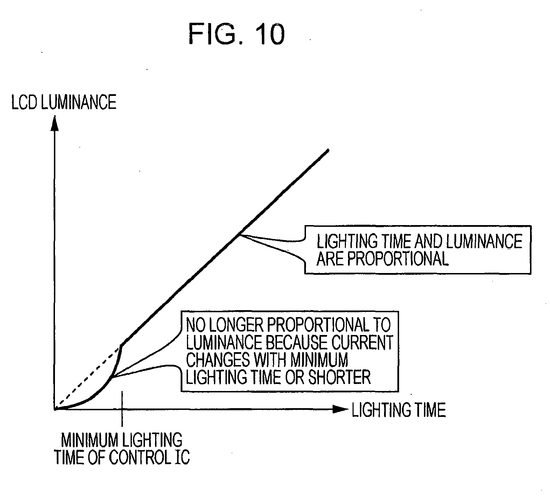

The flow of a current for a lighting time smaller than the minimum lighting time may prevent intended control, as illustrated in Fig. 10, for example. In other words, with the lighting time indicated as a "minimum lighting time" on the axis of lighting time in Fig. 10 or larger, the luminance of an LCD illuminated by the LED is proportional to the lighting time of the LED. On the other hand, with a lighting time smaller than the minimum lighting time, the luminance of an LCD and the lighting time of the LED are no longer proportional. This relationship changes in accordance with the characteristic unique to the control IC. For this reason, control of a lighting time so as to obtain a predetermined luminance may not substantially be performed in the lighting time smaller than the minimum lighting time.

As described above, when the pulse width of an LED used as a backlight of an LCD is controlled by PWM as described above in the related art, if the lighting time is tried to be as short as possible, there is a limit of a minimum lighting time inherent to a control IC for constant current control and a predetermined control may not performed with a pulse width corresponding to a lighting time smaller than the minimum lighting time. In order to solve the problem, the use of a control IC may be considered which has high current capability and rises fast. However, such control IC is not widely used and accordingly is expensive.

Also, the resolution may be increased from a high resolution such as a dimming capability of 1024 steps that are tenth power of 2 to a dimming capability of 4096 steps that are twelfth power of 2. However, a particularly high-performance control IC may need to be selected and used, which is expensive.

The use of a less expensive control IC widely used in the related art may only reduce the luminance by 0.25% of the luminance with 100% lighting of an LED not performing light control when, for example, the PWM frequency is 100 Hz and the minimum pulse width for keeping the minimum lighting time is 25 µsec. In the case of a monitor to be used in a vehicle, for example, the luminance during nighttime might not be reduced sufficiently.

In other words, for example, in the case where a bright LCD with a luminance of 1000 cd/m2 with 100% lighting is used without performing light control, the luminance may only be reduced by 0.25% from the luminance without light control, when the PWM frequency is 100 Hz and the minimum pulse width of 25 µsec. Thus, the luminance may only be reduced to 1000 cd/m2 x 0.25% = 2.5 cd/m2. When a monitor is used in a vehicle, for example, the luminance of an LCD during night time is desirably 1.0 cd/m2 or lower. However, it has been difficult to satisfy such a demand.

Further, as described above, up to now the minimum lighting time could not be reduced below a predetermined time, the dimming resolution could not be increased, and the dimming ratio could not be increased. Thus, the contrast between the darkest part and the brightest part on the screen could not be increased. Accordingly, there is no active backlight function which enables to reduce the luminance of the backlight in a dark part of an image.

Accordingly, it may be an object of the present invention to provide an LED lighting time control apparatus that enables to further reduce the minimum lighting time by a predetermined period of time, in particular for control of the lighting time of an LED that is used as a backlight of an LCD controlled by pulse width control with PWM.

The problem is solved by the features of claim 1. Further embodiments and developments are defined in the dependent claims.

Accordingly, an LED lighting time control apparatus includes PWM pulse setting means configured to set a pulse with a pulse width corresponding to a requested lighting time of an LED that is adapted for use as a backlight for an LCD; a constant-current driver configured to adjust a current to be fed to the LED within a PWM pulse width set by the PWM pulse setting means and to provide the current as a predetermined constant current; and current breaking adjusting means configured to provide an output that turns off the constant-current driver. Particularly, the current breaking adjusting means is configured to provide the output that turns off the constant-current driver, before the time when the PWM pulse is turned off.

Alternatively or additionally, the time when the current breaking adjusting means is configured to break the constant-current driver may be set earlier than the time when a PWM pulse to be output in accordance with a preset minimum lighting time is turned off.

Alternatively or additionally, the current breaking adjusting means may be configured to break the constant-current driver prior to the time when a PWM pulse is turned off except the time when a PWM pulse is output in accordance with a preset minimum lighting time or higher.

In all or particular embodiments of the LED lighting time control apparatus, the current breaking adjusting means may be provided in the constant-current driver on a ground side of the constant-current driver which is configured to turn on/off the current feed to the LED, and a current breaking adjustment transistor may be provided that is configured to perform an ON/OFF operation.

In all or particular embodiments of the LED lighting time control apparatus, a plurality of constant-current drivers may be provided for a group of a plurality of parallel LEDs, and one current breaking adjustment transistor may be provided between a part connecting ground sides of the plurality of constant-current drivers and a ground part.

In particular embodiments of the LED lighting time control apparatus, the current breaking adjusting means may be provided separately from an LED control means having the constant-current driver, the PWM setting means, and constant current setting means. Alternatively, the current breaking adjusting means may be provided within the LED control means having the constant-current driver, the PWM setting means, and constant current setting means.

Additionally or alternatively, the current breaking adjusting means may be configured to generate a pulse for breaking the constant-current driver, and to turn on the pulse for breaking the constant-current driver at a time different from the time set by the PWM pulse setting means for turning on a PWM pulse and to turned off the pulse for breaking the constant-current driver at a requested time for turning off the LED.

Additionally or alternatively, the time when the current breaking adjusting means is turned on may be set to be earlier than the time when the PWM pulse is turned on by a predetermined period of time.

Alternatively or additionally, the time when the current breaking adjusting means breaks the constant-current driver may be set to be at or after the time when the constant-current driver is energized to have a constant current after a predetermined delay time.

The invention configured as described above may solve the following problem. That is, when an LED as a backlight for an LCD is controlled with a PWM pulse, there is a limitation of the minimum width of the PWM pulse due to the minimum lighting time according to the characteristic of the control IC to be used. With the pulse width equal to or smaller than the minimum width, the proportional relationship between the lighting time and the luminance of the LCD is no longer satisfied, causing the control thereon not to be substantially performed. The invention configured as described above may solve the problem by providing a current breaking adjuster which implements a function of separately breaking an operation of a constant current driver. Thus, an operation of the constant current driver may be stabilized and be turned off at a time desired. As a result, proportional relationship between the lighting time and the luminance of the LCD may be maintained even in the minimum lighting time or shorter.

Thus, the luminance of an LCD may be further securely reduced while the related art may only reduce the luminance of an LCD up to the minimum lighting time. For example, the luminance of an LCD monitor during night time may further be reduced, and the glare caused when the LCD monitor is used in a vehicle, for example, may be securely reduced.

When the frequency of a PWM pulse is 100 Hz and the PWM pulse width corresponding to the minimum lighting time is 25 µsec, for example, the brightness of the LED having a pulse width as a result of 100% lighting by turning off the light control may be 1000 cd/m2, for example. In this case, the related art may only reduce the luminance up to 2.5 cd/m2 that is 0.25% of 1000 cd/m2. For the same reason as described above, the configuration of the present invention may reduce the luminance up to 0.1%, 0.05% or the like. An LCD with sufficiently low luminance may be implemented without using an expensive control IC.

Moreover, the minimum luminance may be reduced. Thus, the contrast between a dark part and a bright part on an LCD screen may be increased. The power consumption may be reduced when the LCD screen has more dark parts. For the same reason, the dimming ratio may be set in detail, and the dimming resolution may be increased. Thus, finer display may be achieved on the LCD screen.

According to the present invention, an inexpensive transistor may be used as a current breaking adjuster with no needs for use of a high current capability element or a high resolution element and an expensive control IC. Therefore, costs can be reduced.

Furthermore, turning off an operation of a constant current driver by using a current breaking adjuster according to the present invention is particularly effective for control over the minimum lighting time as described above. Moreover, it is effective for PWM pulse control in general by outputting a PWM pulse which keeps an ON state slightly longer than a requested lighting time of an LED and turning off the constant current driver at the time corresponding to the requested lighting time by means of the current breaking adjuster. In this case, the dimming ratio may be improved more than that in the related art, and an LCD with a high dimming resolution may be achieved.

### BRIEF DESCRIPTION OF THE DRAWINGS

Fig. 1 is a circuit diagram illustrating an embodiment of the present invention with function blocks thereof;
Figs. 2A to 2D illustrate waveforms at parts (a) to (d) in Fig. 1, respectively, in comparison with an example in the related art;
Fig. 3 is an operation flowchart describing lighting control processing for a lighting time equal to or shorter than a minimum lighting time of an LED according to an embodiment of the present invention;
Figs. 4A to 4F are waveform diagrams illustrating time points and periods used in the operation flows in Fig. 3;
Fig. 5 illustrates a relationship between lighting times and LCD luminances of the present invention;
Figs. 6A and 6B illustrate other embodiments of the present invention;
Fig. 7 illustrates an example in the related art;
Figs. 8A and 8B illustrate relationships between PWM pulses of LED and constant current pulses of LED lighting in the related art;
Fig. 9 illustrates relationships between maximum possible currents of a control IC and minimum lighting times caused by the currents; and
Fig. 10 illustrates a relationship between LED lighting times and LCD luminances according to the related art.

### DESCRIPTION OF THE PREFERRED EMBODIMENTS

Embodiments of the present invention will be described with reference to drawings.

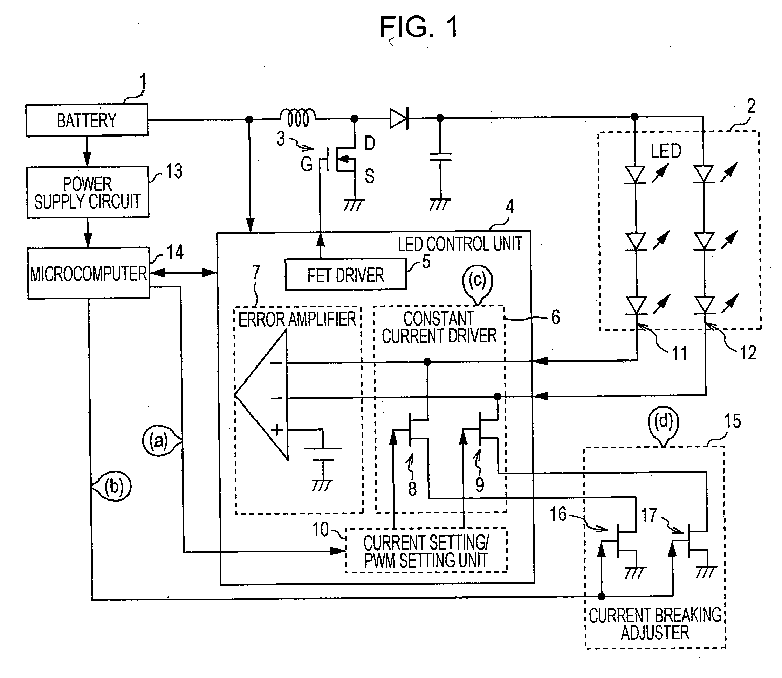

Fig. 1 illustrates an embodiment of an LED short lighting time control circuit according to the present invention, which is implemented on the basis of the related art illustrated in Fig. 7. In other words, in the example illustrated in Fig. 1, a boosting constant current circuit performs lighting control over 2-parallel arrays of respective 3-serial LEDs in the same manner as the example in the related art illustrated in Fig. 7. Current is fed from a battery 1 to an LED 2 under the control by an FET 3.

In the circuit illustrated in Fig. 1, the driving of the FET 3 is controlled by an FET driver 5 in an LED control unit 4. The LED control unit 4 includes a constant current driver 6 so that a predetermined amount of current is fed to the LED 2. Predetermined set amounts of current are fed to the illustrated 2 parallel first LED array 11 and second LED array 12 with a first constant current driver 8 and a second constant current driver 9, respectively, in accordance with the PWM pulses set in a current setting/PWM setting unit 10.

In this case, for each of the first LED array 11 and the second LED array 12, an error amplifier 7 detects and amplifies an error, and feedback control is performed by performing PWM control such that predetermined amounts of current may be fed to them based on the setting in the FET driver 5. Under this control, the voltage of the battery 1 is received, and variations of voltage fed to the LEDs, which particularly occur in a vehicle battery, are monitored. A microcomputer 14 which receives the voltage of the same battery 1 through a power supply circuit 13 for the microcomputer receives detection values detected by the components within the LED control circuit 4 for control by predetermined software.

On the premise of the configuration of an LED lighting control circuit in the related art as described above, the circuit of the embodiment illustrated in Fig. 1 has a current breaking adjuster 15 in a part where the first constant current driver 58 and second constant current driver 59 in the example in the related art in Fig. 7 are directly grounded outside the LED control unit 54.

The current breaking adjuster 15 illustrated in Fig. 1, separately from the circuit element part of the LED control unit 4 used in the related art, internally contains a first current breaking adjustment transistor 16 in a grounded part of the first constant current driver 8 and a second current breaking adjustment transistor 17 in a grounded part of the second constant current driver 9. The current breaking transistor may be any element which functions as a widely used transistor including an FET.

The first current breaking adjustment transistor 16 and second current breaking adjustment transistor 17 are driven by a microcomputer 14 at timings which will be described below and may be coercively turned off even when a PWM pulse performs an ON operation in a minimum lighting time and the constant current drivers are feeding a constant current.

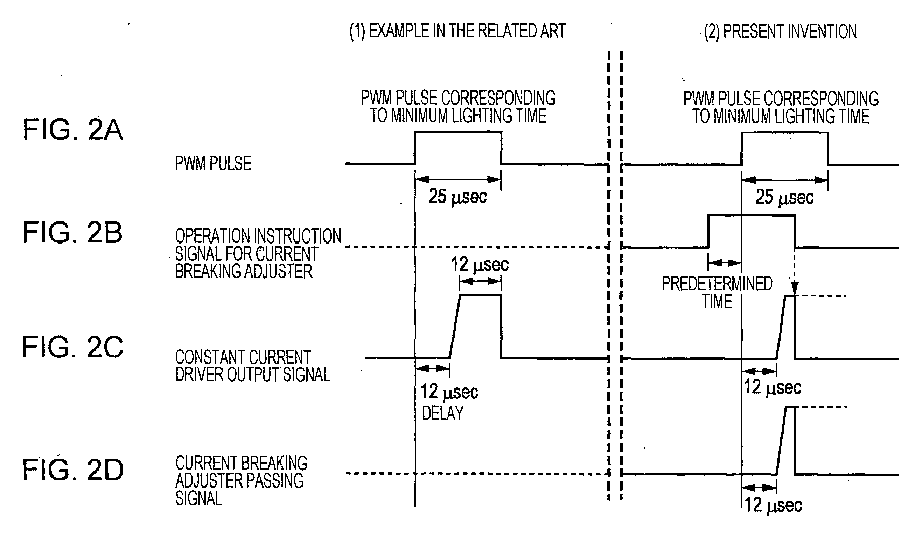

Figs. 2A to 2D are waveform diagrams illustrating output waveforms of the components in the circuit configuration, compared with those of an example in the related art. Part (1) of Figs. 2A to 2D includes waveforms of an example in the related art, and Part (2) includes waveforms of the present invention. Fig. 2A illustrates voltage waveforms of a PWM pulse input from the microcomputer 14 to the current setting/PWM setting unit 10 in the LED control unit 4 as illustrated in Fig. 1. Fig. 2B illustrates voltage waveforms of a PWM pulse input from the microcomputer 14 to the current breaking adjuster 15. Fig. 2C illustrates a waveform under constant current control by the constant current driver 6. Fig. 2D illustrates waveforms as a result of breaking adjustment by the current breaking adjuster 15 on the waveforms under the constant current control.

As in the waveform diagrams in Figs. 2A to 2D, the PWM pulse in Fig. 2A is 25 µsec that is equal to the example in the related art (1) and the present invention (2). On the other hand, the waveform in the current breaking adjuster in Fig. 2B is only output by the present invention (2). The pulse waveform of the current breaking adjuster illustrated in Fig. 2B is turned on earlier than the time when the waveform of the PWM pulse in Fig. 2A is turned on by a predetermined period of time such as 10 µsec, which may prevent an influence on an operation of a PWM pulse that will be turned on thereafter.

The operation pulse of the current breaking adjuster illustrated in Fig. 2B stops an operation by breaking the ground of a transistor of the constant current driver 6 at a time point OFF. Thus, the current to be fed to the LED may be adjusted at the time point OFF. As illustrated in Fig. 2C, an example in the related art without the current breaking adjuster may not reduce the minimum lighting time shorter than 12 µsec that is the minimum lighting time as in (1) described in the related art. On the other hand, according to the present invention, as illustrated in Fig. 2C (2), the minimum lighting time may be controlled to a desired lighting time equal to or shorter than 12 µsec, without reducing the pulse width of a PWM pulse required for keeping the minimum lighting time.

Because a pulse in the current breaking adjuster 15 performs the operation as described above and reduces the minimum lighting time more than before, the OFF time of the operation pulse is set at a desirable point in time that is earlier than the OFF time of a PWM pulse in FIG. 2A. Furthermore, because the pulse is for controlling the minimum lighting time, the OFF time of the operation pulse is set at a point in time when a constant current is obtained after a 12 µsec delay time and a 1 µsec rising time obtained in the constant current driver in Fig. 2C.

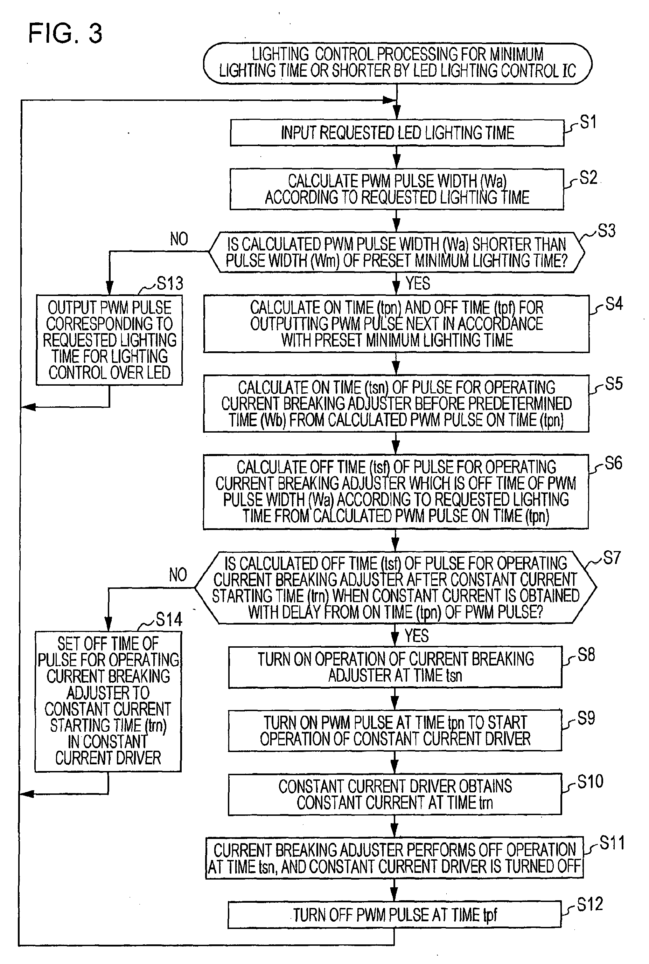

The present invention may be implemented by an operation flow as illustrated in Fig. 3, for example, in order to control a LED lighting time shorter than the minimum lighting time in the related art with a current breaking adjuster as illustrated in Figs. 2A to 2D in an LED lighting control circuit as illustrated in Fig. 1 according to the present invention.

That is, in an example of lighting control processing for an LED lighting time equal to or shorter than the LED minimum lighting time in Fig. 3, a requested lighting time of an LED is first input (step S1).

For the requested lighting time, an instruction for a requested brightness is input in order to change the brightness of the backlight of the entire screen or a part of the screen due to some screen state or some ambient brightness of an LCD for which the LED is used. In many cases, a user instruction regarding the display of the LCD or an automatic brightness instruction signal is input.

Next, a PWM pulse width (Wa) corresponding to the requested lighting time is calculated (step S2). This operation is implemented by a conventional method in consideration of the characteristic of the used LED.

Next, in the example in Fig. 3, whether the calculated PWM pulse width (Wa) is smaller than the pulse width (Wm) of the preset minimum lighting time or not is determined (step S3).

In step S3, whether the pulse width (Wa) corresponding to the requested lighting time is smaller than 25 µsec is determined because the minimum lighting time is about 25 µsec for the reason as described above in a presently widely used lighting control IC as described with the related art.

If it is determined in step S3 that the PWM pulse width (Wa) of the requested lighting time is not smaller than the PWM pulse width (Wm) of the preset minimum lighting time, the processing moves to step S13 where the PWM pulse corresponding to the requested lighting time is output for the lighting control over the LED. After that, the processing returns to step S1, a new requested LED lighting time is input, and the operation described above is repeated.

Though the processing in step S13 is similar to the conventional processing, a PWM pulse having a sufficiently larger pulse width than a requested lighting time may be output, and the OFF time of the current breaking adjuster may be output so as to achieve the requested lighting time for the operation, according to the present invention. In this case, finer lighting time control with a high resolution than before may be allowed even with a PWM pulse.

If it is determined in step S3 that the PWM pulse width (Wa) of the requested lighting time is smaller than the PWM pulse width (Wm) of the preset minimum lighting time, the processing moves to step S4 where an ON time (tpn) and an OFF time (tpf) for outputting the PWM pulse to be output next in accordance with the preset minimum lighting time.

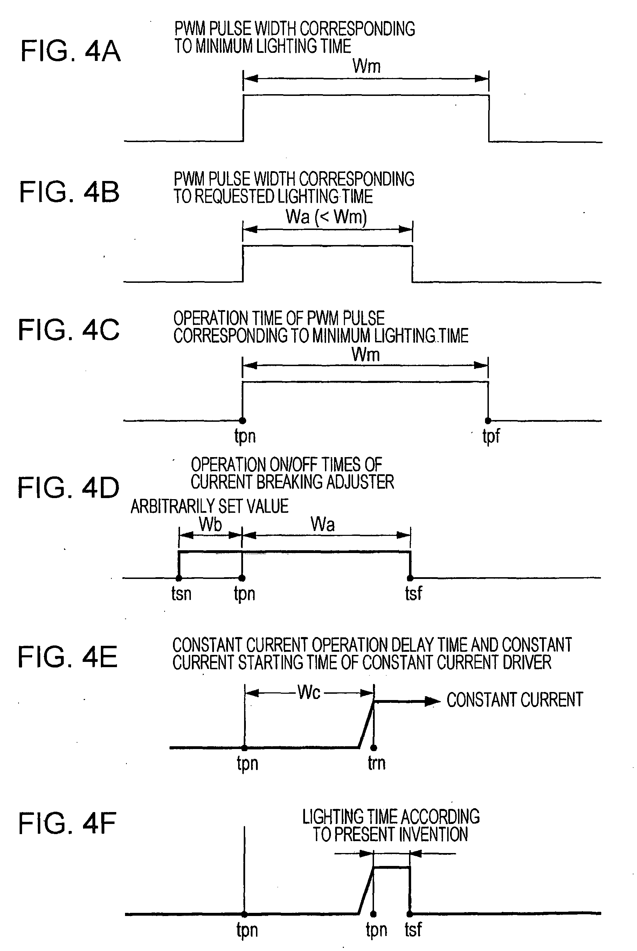

This operation will be described with reference to Figs. 4A to 4F. When the pulse width of a PWM pulse corresponding to the minimum lighting time is Wm as in Fig. 4A, the pulse width corresponding to the requested lighting time acquired in step S2 in Fig. 3 is Wa as in Fig. 4B. Thus, it is determined in step S3 that the PWM pulse width (Wa) of the requested lighting time is smaller than the PWM pulse width (Wm) of the preset minimum lighting time. In step S4, as illustrated in Fig. 4C, the ON time (tpn) and OFF time (tpf) of the PWM pulse to be output in accordance with the set minimum lighting time are calculated. The ON time in this case may be, in many cases, a time for turning on the pulse at a predetermined frequency of the PWM pulse. The OFF time may be a time after Wm that is the minimum lighting time corresponding to the PWM pulse width.

After that, referring to Fig. 3, an ON time (tsn) for a pulse for an operation by a current breaking adjuster a predetermined period of time (Wb) before the calculated PWM pulse ON time (tpn) is calculated (step S5). As illustrated in Fig. 4D, this operation sets the time tsn a period of time (Wb) such as 10 µsec, which is set as required, before the time tpn when the PWM pulse in Fig. 4C is turned on as the ON time of the pulse for an operation by the current breaking adjuster.

The required time (Wb) is set so as to prevent an operation interference due to the coincidence between the ON operation of the current breaking adjuster and the ON operation of the PWM pulse. From the viewpoint, any period of time may be set. Therefore, the required time (Wb) may be set to simultaneously turn ON the current breaking adjuster and the PWM pulse if the coincidence does not have an influence on operations of the constant current driver and so on.

After that, in step S6, an OFF time (tsf) of the pulse for an operation of the current breaking adjuster which corresponds to the OFF time with the PWM pulse width (Wa) according to the requested lighting time is calculated from the calculated PWM pulse ON time (tpn). This operation is implemented by calculating the OFF time (tsf) with the PWM pulse width (Wa) according to the requested lighting time from the PWM pulse ON time (tpn), as illustrated in Fig. 4D.

Next, referring to the example in Fig. 3, in step S7, whether the calculated OFF time (tsf) for the operation pulse of the current breaking adjuster is after a constant current starting time (trn) when a constant current is obtained with a delay from the ON time (tpn) of the PWM pulse or not is determined. This processing has a delay caused by a series of operations of starting an operation of the constant current driver with a PWM pulse from the time tpn, then performing constant current setting, operating the constant current driver next, and feeding current, as illustrated in Fig. 4E.

The delay time due to the processing may differ in accordance with the characteristic of the control IC but may be about 13 µsec in a widely used control IC as described above, which is a value known in advance. In the illustrated example, the operation starts from the time tpn, and a constant current is obtained at the time trn after the delay time of the preset time Wc.

In step S7, whether the OFF time (tsf) of the operation pulse for the current breaking adjuster acquired in Fig. 4D is after the constant current starting time (trn) or not is determined. If it is before the constant current starting time, the minimum lighting time in the current breaking adjuster may not be controlled in accordance with the requested lighting time. Thus, the processing moves to step S14 in Fig. 3 where the OFF time of the pulse for an operation of the current breaking adjuster is set to the constant current starting time (trn) that is the minimum constant current adjusting time in the constant current driver. The processing then returns to step S1, and the operation is repeated.

If it is determined in step S7 that the OFF time (tsf) of the operation pulse for the current breaking adjuster acquired in Fig. 4D is after the constant current starting time (trn), operations corresponding to the calculated times are sequentially performed in and after processing step S8.

In step S8 in the example in Fig. 3, the operation of the current breaking adjuster is turned on at the time tsn in Fig. 4D. Next, in step S9, at the time tpn, the PWM pulse is turned on to start an operation of the constant current driver. The constant current control is, however, performed by the constant current driver with an operation delay as described above.

Next, in step S10, the constant current driver obtains a constant current at the time trn. In step S11 next, the current breaking adjuster is turned off at the time tsn, and the constant current driver is thus turned off. In step S12, the PWM pulse is turned off at the time tpf at the end of a series of the operations described above. Then, the processing returns to step S1, and the operations are repeated. These operations allow accurate lighting operation control with a pulse width corresponding to a lighting time smaller than a conventional minimum lighting time, as illustrated in Fig. 4F.

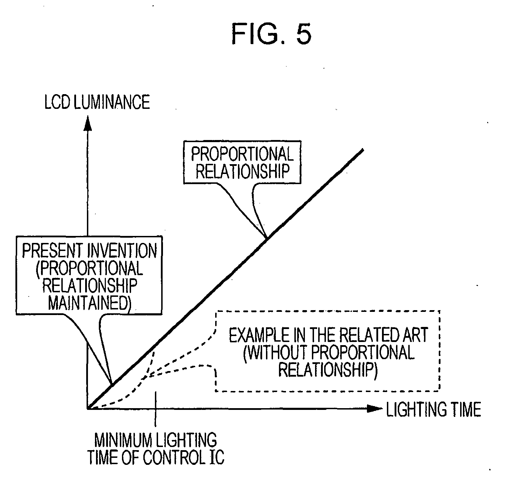

Moreover, in the relationship between a lighting time and an LCD luminance, as illustrated in Fig. 5, performing those operations according to the present invention may eliminate the operation with a curve according to a characteristic inherent to each control IC caused by a smaller lighting time than its conventional minimum lighting time. Thus, the lighting time and the LCD luminance may keep a proportional relationship even with a smaller lighting time than the minimum lighting time.

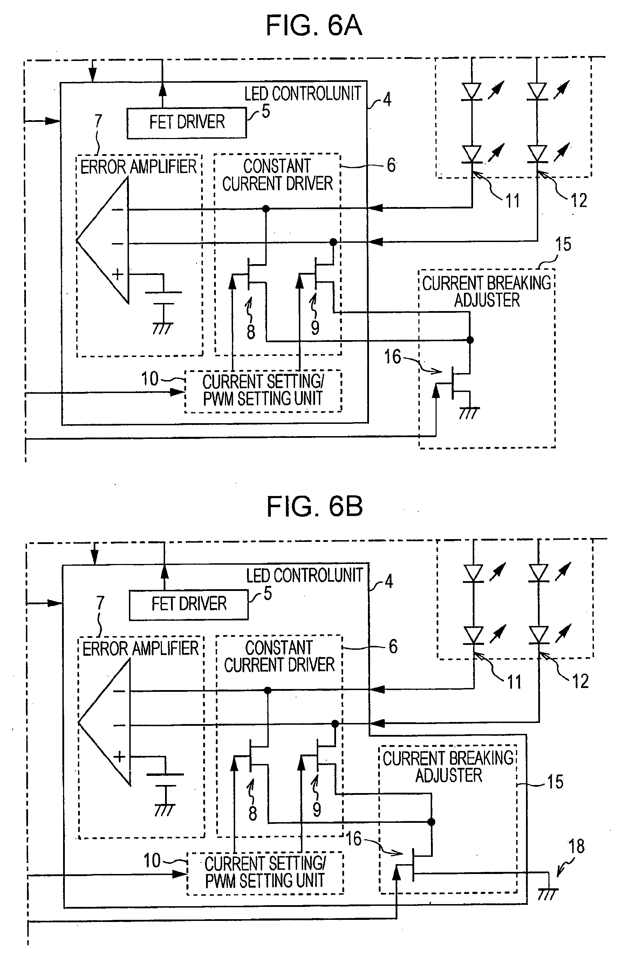

The current breaking adjuster used in the present invention may be implemented in various forms as illustrated in Figs. 6A and 6B, for example. Fig. 6A illustrates a circuit diagram with some part illustrated in Fig. 1 being omitted. In the current breaking adjuster 15 in Fig. 6A, ground wires of the first constant current driver 8 and second constant current driver 9 of the constant current driver 6, which are drawn externally from the LED control unit 4, are connected. One first current breaking adjustment transistor 16 is provided between the connected part and the grounded part and is controlled by a microcomputer to implement the current breaking adjuster. This can reduce the number of current breaking adjustment transistors than that of the circuit illustrated in Fig. 1 and thus can reduce the costs.

According to an embodiment illustrated in Fig. 6B, the current breaking adjuster 15 is included in the LED control unit 4. According to the illustrated embodiment, like the embodiment in Fig. 6A, the ground connection wires of the first constant current driver 8 and second constant current driver 9 are connected within the LED control unit 4, and one first current breaking adjustment transistor 16 is provided after the connection part, and the ground wires are drawn externally from the LED control unit 4. This allows the current breaking adjuster 15 to be included in a control circuit constituted by the LED control unit 4 in advance, which can stabilize an operation of the current breaking adjuster 15 with the constant current circuit in the LED control unit 4 and thus the costs are reduced.

## Claims

1. An LED lighting time control apparatus configured to control the time for lighting an LED (2) in accordance with the pulse width of a PWM pulse, the apparatus comprising:
PWM pulse setting means (10) configured to set a pulse with a pulse width corresponding to a requested lighting time of the LED (2) adapted for use as a backlight for an LCD, wherein settable pulse width is limited by an inherent preset minimum pulse width;
a constant-current driver (6) configured to adjust a current to be fed to the LED (2) within a PWM pulse width set by the PWM pulse setting means (10) and to provide the current as a predetermined constant current;
**characterized by**
current breaking adjusting means (15) configured to turn off the current fed to the LED (2) which is provided by the constant-current driver (6), before the time when the PWM pulse is turned off if the requested lighting time of the LED (2) is smaller than the preset minimum pulse width.

2. The LED lighting time control apparatus according to Claim 1, wherein the time when the current breaking adjusting means (15) is configured to break current provided by the constant-current driver (6) is configured to be earlier than the time when a PWM pulse to be output in accordance with the preset minimum lighting time is turned off.

3. The LED lighting time control apparatus according to Claim 2, wherein the current breaking adjusting means (15) is configured to break the current provided by the constant-current driver (6) prior to the time when a PWM pulse is turned off other than the time when a PWM pulse is output in accordance with the preset minimum lighting time.

4. The LED lighting time control apparatus according to Claim 1, wherein the current breaking adjusting means (15) is provided in the constant-current driver (6) on a ground side of the constant-current driver (6) which is configured to turn on/off the current feed to the LED (2), and includes a current breaking adjustment transistor (16, 17) that is configured to perform an ON/OFF operation.

5. The LED lighting time control apparatus according to Claim 4, wherein a plurality of constant-current drivers (6) are provided for a group of a plurality of parallel LEDs (2); and
one current breaking adjustment transistor (16, 17) is respectively provided between a part connecting ground sides of the plurality of constant-current drivers and a ground part.

6. The LED lighting time control apparatus according to Claim 1, wherein the current breaking adjusting means (15) is provided separately from an LED control means (4) having the constant-current driver (6), the PWM setting means (10), and constant current setting means (10).

7. The LED lighting time control apparatus according to Claim 1, wherein the current breaking adjusting means (15) is provided within an LED control means (4) having the constant-current driver (6), the PWM setting means (10), and constant current setting means (10).

8. The LED lighting time control apparatus according to Claim 1, wherein the current breaking adjusting means (15) is driven by a microcomputer (14) configured to generate a pulse for control of the constant-current driver (6), to turn on the pulse at a time different from the time set by the PWM pulse setting means (10) for turning on a PWM pulse, and to turn off the pulse for breaking the current provided by the constant-current driver (6) at a requested time for turning off the LED (2).

9. The LED lighting time control apparatus according to Claim 8, wherein the time when the current breaking adjusting means (15) is turned on is configured to be earlier, by a predetermined period of time, than the time when the PWM pulse is turned on.

10. The LED lighting time control apparatus according to Claim 1, wherein the time when the current breaking adjusting means (15) breaks the current provided by constant-current driver (6) is configured to be at or after the time when the constant-current driver (6) is energized to have a constant current after a certain delay time.

## Patentansprüche

1. LED-Leuchtzeit-Steuervorrichtung, die dazu ausgebildet ist, die Leuchtzeit einer LED (2) nach Maßgabe der Pulsbreite eines PWM-Pulses zu steuern, wobei die Vorrichtung Folgendes aufweist:
eine PWM-Pulsvorgabeeinrichtung (10), die dazu ausgebildet ist,
einen Puls mit einer Pulsbreite entsprechend einer angeforderten Leuchtzeit der LED (2) vorzugeben, die zur Verwendung als Hintergrundbeleuchtung für eine LCD ausgebildet ist, wobei eine vorgebbare Pulsbreite durch eine inhärente vorgegebene Mindest-Pulsbreite begrenzt ist;
einen Konstantstrom-Treiber (6), der dazu ausgebildet ist, einen der LED (2) zuzuführenden Strom innerhalb einer von der PWM-Pulsvorgabeeinrichtung (10) vorgegebenen PWM-Pulsbreite einzustellen und den Strom als vorbestimmten Konstantstrom bereitzustellen;
**gekennzeichnet durch**
eine Stromunterbrechungs-Einstelleinrichtung (15), die dazu ausgebildet ist, den von dem Konstantstrom-Treiber (6) bereitgestellten und der LED (2) zugeführten Strom vor dem Zeitpunkt auszuschalten, zu dem der PWM-Puls ausgeschaltet wird, wenn die angeforderte Leuchtzeit der LED (2) geringer ist als die vorgegebene Mindest-Pulsbreite.

2. LED-Leuchtzeit-Steuervorrichtung nach Anspruch 1,
wobei der Zeitpunkt, zu dem die Stromunterbrechungs-Einstelleinrichtung (15) zum Unterbrechen des von dem Konstantstrom-Treiber (6) bereitgestellten Stroms ausgebildet ist, früher liegend vorgesehen ist als der Zeitpunkt, zu dem ein nach Maßgabe der vorgegebenen Mindest-Leuchtzeit abzugebender PWM-Puls ausgeschaltet wird.

3. LED-Leuchtzeit-Steuervorrichtung nach Anspruch 2,
wobei die Stromunterbrechungs-Einstelleinrichtung (15) dazu ausgebildet ist, den von dem Konstantstrom-Treiber (6) bereitgestellten Strom vor dem Zeitpunkt zu unterbrechen, zu dem ein PWM-Puls zu einem anderen Zeitpunkt ausgeschaltet wird als dem Zeitpunkt, wenn ein PWM-Puls nach Maßgabe der vorgegebenen Mindest-Leuchtzeit abgegeben wird.

4. LED-Leuchtzeit-Steuervorrichtung nach Anspruch 1,
wobei die Stromunterbrechungs-Einstelleinrichtung (15) in dem Konstantstrom-Treiber (6) auf einer Masseseite des Konstantstrom-Treibers (6) vorgesehen ist, der zum Einschalten/Ausschalten der Stromzufuhr zu der LED (2) ausgebildet ist, und einen Stromunterbrechungs-Einstelltransistor (16, 17) beinhaltet, der zum Ausführen eines Einschalt-/Ausschalt-Vorgangs ausgebildet ist.

5. LED-Leuchtzeit-Steuervorrichtung nach Anspruch 4,
wobei eine Mehrzahl von Konstantstrom-Treibern (6) für eine Gruppe aus einer Mehrzahl von parallelen LEDs (2) vorgesehen ist; und wobei jeweils ein Stromunterbrechungs-Einstelltransistor (16, 17) zwischen einem Teil, der Masseseiten der Mehrzahl von Konstantstrom-Treibern verbindet, und einem Masseteil vorgesehen ist.

6. LED-Leuchtzeit-Steuervorrichtung nach Anspruch 1,
wobei die Stromunterbrechungs-Einstelleinrichtung (15) getrennt von einer LED-Steuereinrichtung (4) vorgesehen ist, die den Konstantstrom-Treiber (6), die PWM-Vorgabeeinrichtung (10) und die Konstantstrom-Vorgabeeinrichtung (10) aufweist.

7. LED-Leuchtzeit-Steuervorrichtung nach Anspruch 1,
wobei die Stromunterbrechungs-Einstelleinrichtung (15) innerhalb einer LED-Steuereinrichtung (4) vorgesehen ist, die den Konstantstrom-Treiber (6), die PWM-Vorgabeeinrichtung (10) und die Konstantstrom-Vorgabeeinrichtung (10) aufweist.

8. LED-Leuchtzeit-Steuervorrichtung nach Anspruch 1,
wobei die Stromunterbrechungs-Einstelleinrichtung (15) von einem Mikrocomputer (14) angesteuert wird, der zum Erzeugen eines Pulses zum Steuern des Konstantstrom-Treibers (6) ausgebildet ist, um den Puls zu einem anderen Zeitpunkt einzuschalten als dem Zeitpunkt, der von der PWM-Pulsvorgabeeinrichtung (10) zum Einschalten eines PWM-Pulses vorgegeben wird, und um den Puls zum Unterbrechen des von dem Konstantstrom-Treiber (6) bereitgestellten Stroms zu einem angeforderten Zeitpunkt zum Ausschalten der LED (2) auszuschalten.

9. LED-Leuchtzeit-Steuervorrichtung nach Anspruch 8,
wobei der Zeitpunkt, zu dem die Stromunterbrechungs-Einstelleinrichtung (15) eingeschaltet wird, um eine vorbestimmte Zeitdauer früher liegend vorgesehen ist als der Zeitpunkt, zu dem der PWM-Puls eingeschaltet wird.

10. LED-Leuchtzeit-Steuervorrichtung nach Anspruch 1,
wobei der Zeitpunkt, zu dem die Stromunterbrechungs-Einstelleinrichtung (15) den von dem Konstantstrom-Treiber (6) bereitgestellten Strom unterbricht, an oder nach dem Zeitpunkt liegend vorgesehen ist, zu dem der Konstantstrom-Treiber (6) aktiviert wird, so dass er nach einer bestimmten Verzögerungszeit einen konstanten Strom hat.

## Revendications

1. Appareil de contrôle du temps d'éclairage à DEL, configuré pour contrôler le temps d'éclairage d'une DEL (2), conformément à la largeur d'impulsion d'une impulsion MIL, l'appareil comprenant :
un moyen (10) de réglage d'impulsion MIL, configuré pour régler une impulsion avec une largeur d'impulsion correspondant à un temps d'éclairage demandé de la DEL (2), adapté pour s'appliquer comme rétroéclairage pour un affichage à cristaux liquides LCD, dans lequel la largeur réglable de l'impulsion est limitée par une largeur minimale préréglée intrinsèque de l'impulsion ;
un pilote (6) à courant constant, configuré pour régler un courant, destiné à être amené à la DEL (2), dans les limites d'une largeur d'impulsion MIL, réglée par le moyen (10) de réglage d'impulsion MIL et pour fournir le courant en tant que courant constant prédéterminé,
**caractérisé par**
un moyen (15) de réglage de coupure de courant, configuré pour couper le courant, amené à la DEL (2), qui est fourni par le pilote (6) à courant constant, avant le moment où l'impulsion MIL est désactivée si le temps d'éclairage demandé de la DEL (2) est inférieur à la largeur minimale préréglée de l'impulsion.

2. Appareil de contrôle du temps d'éclairage à DEL selon la revendication 1, dans lequel le temps, pendant lequel le moyen (15) de réglage de coupure de courant est configuré pour couper le courant, fourni par le pilote (6) à courant constant, est configuré pour être plus précoce que le temps, pendant lequel l'impulsion MIL, à produire conformément au temps minimum préréglé d'éclairage, est désactivée.

3. Appareil de contrôle du temps d'éclairage à DEL selon la revendication 2, dans lequel le moyen (15) de réglage de coupure de courant est configuré pour couper le courant, fourni par le pilote (6) à courant constant, avant le moment où l'impulsion MIL est désactivée, à un autre moment que le moment où une impulsion MIL est produite conformément au temps minimum préréglé d'éclairage.

4. Appareil de contrôle du temps d'éclairage à DEL selon la revendication 1, dans lequel le moyen (15) de réglage de coupure de courant est prévu dans le pilote (6) à courant constant, sur un côté terre du pilote (6) à courant constant, qui est configuré pour connecter / déconnecter le courant, amené à la DEL (2) et comporte un transistor (16, 17) de réglage de coupure de courant, qui est configuré pour effectuer une opération CONNEXION / DÉCONNEXION.

5. Appareil de contrôle du temps d'éclairage à DEL selon la revendication 4, dans lequel est prévue une pluralité de pilotes (6) à courant constant, pour un groupe d'une pluralité de DEL (2) en parallèle et
un transistor (16, 17) de réglage de coupure de courant est prévu, respectivement, entre une partie, qui connecte les côtés terre de la pluralité de pilotes à courant constant et une partie terre.

6. Appareil de contrôle du temps d'éclairage à DEL selon la revendication 1, dans lequel le moyen (15) de réglage de coupure de courant est prévu séparément d'un moyen (4) de contrôle à DEL ayant le pilote (6) à courant constant, le moyen (10) de réglage de MIL et le moyen (10) de réglage à courant constant.

7. Appareil de contrôle du temps d'éclairage à DEL selon la revendication 1, dans lequel le moyen (15) de réglage de coupure de courant est prévu dans un moyen (4) de contrôle à DEL ayant le pilote (6) à courant constant, le moyen (10) de réglage de MIL et le moyen (10) de réglage à courant constant.

8. Appareil de contrôle du temps d'éclairage à DEL selon la revendication 1, dans lequel le moyen (15) de réglage de coupure de courant est piloté par un microordinateur (14), configuré pour produire une impulsion de contrôle du pilote (6) à courant constant, pour connecter l'impulsion à un moment, différent du moment, réglé par le moyen (10) de réglage d'impulsion MIL, destiné à activer une impulsion MIL et pour désactiver l'impulsion, destinée à couper le courant, fourni par le pilote (6) à courant constant, à un moment requis pour désactiver la DEL (2).

9. Appareil de contrôle du temps d'éclairage à DEL selon la revendication 8, dans lequel le moment, où le moyen (15) de réglage de coupure de courant est activé, est configuré pour être plus précoce, d'une période prédéterminée de temps, que le moment, où l'impulsion MIL est activée.

10. Appareil de contrôle du temps d'éclairage à DEL selon la revendication 1, dans lequel le moment, où le moyen (15) de réglage de coupure de courant coupe le courant, fourni par le pilote (6) à courant constant, est configuré pour être le ou après le moment, où le pilote (6) à courant constant est mis sous tension pour avoir un courant constant après un certain délai d'attente.
